# EUROPÄISCHE PATENTSCHRIFT

(11) **EP 1 762 741 B1**
(45) Veröffentlichungstag und Bekanntmachung des Hinweises auf die Patenterteilung: **01.08.2012**
(21) Anmeldenummer: 06017119.6
(22) Anmeldetag: 17.08.2006
(51) Int. Cl.: F16D 48/06

(54) **Verfahrren und Vorrichtung zum Steuern des Betriebs einer im Antriebsstrang eines Fahrzeugs angeordneten Kupplung**
Method and device to control the operation of a clutch arranged in the transmission of a vehicle
Procédé et appareil pour contrôler l'opération d'un embrayage dans une ligne de transmission d'un véhicule

(30) Priorität: 09.09.2005 DE 102005042974
(43) Veröffentlichungstag der Anmeldung: 14.03.2007
(73) Patentinhaber: Schaeffler Technologies AG & Co. KG, 91074 Herzogenaurach (DE)
(72) Erfinder: Stork, Holger Dr., 77815 Bühl (DE); Küpper, Klaus Dr., 77815 Bühl (DE)

(56) Entgegenhaltungen:
- EP-A2- 0 231 465
- EP-A2- 0 259 634
- DE-A1- 10 157 506
- DE-A1- 10 220 869
- DE-A1-102004 043 541
- FR-A1- 2 021 254
- US-A- 6 061 619

## Beschreibung

Die Erfindung betrifft ein Verfahren zum Steuern des Betriebs einer im Antriebsstrang eines Fahrzeugs angeordneten Kupplung, welche Kupplung von einem Aktor bei Aktivierung eines Fahrzeugstabilitätssteuersystems geöffnet wird. Die Erfindung betrifft weiter eine Vorrichtung zum Steuern des Betriebs einer im Antriebsstrang eines Fahrzeugs angeordneten Kupplung.

In der europäischen Patentanmeldung EP 0 259 634 A2 wird eine Vorrichtung zur Kupplungsbetätigung vorgeschlagen, bei welcher die funktionale Verbindung zwischen der Betätigung der Kupplung und der Auslenkung des Kupplungspedals über eine zwischengeschaltete elektronische Steuereinheit erfolgt. Zur Ermittlung des Sollwerts befindet sich am Kupplungspedal ein erster Wegaufnehmer, zur Ermittlung des Istwertes befindet sich an einem Ausrückhebel der Kupplung ein weiterer Wegaufnehmer. Der Ausrückhebel ist mit einem Betätigungszylinder verbunden, welcher mittels eines Steuerventils in Abhängigkeit von den Ausgangssignalen der elektronischen Steuereinheit verstellbar ist. Außer dem über den Wegaufnehmer ermittelten Sollwert wird der elektronischen Steuereinheit ein zusätzliches Signal einer Regeleinheit zugewiesen, welche abhängig ist vom Vorliegen einer Regelfunktion einer Blockierschutzreglung (ABS). Die beschriebene Vorrichtung ermöglicht also die automatische Betätigung der Kupplung innerhalb einer ABS-Regelung.

Die deutsche Offenlegungsschrift DE 10 2004 043 541 A1 offenbart ein Verfahren sowie eine Vorrichtung zur Steuerung einer Ausrückvorrichtung. Bei einem Verfahren zur Steuerung einer Ausrückvorrichtung zur Betätigung einer Kupplung, insbesondere einer Kupplung im Antriebsstrang eines Kraftfahrzeugs zwischen Antriebsmotor und Schaltgetriebe, umfassend einen Aktor zur Betätigung der Kupplung, einen Kupplungspedal-Stellungsgeber, welcher die Stellung eines manuell betätigbaren Kupplungspedals erfasst und als elektrisches Signal an ein Kupplungssteuergerät weiterleitet, welches über eine weitere elektronische Steuerleitung den Aktor ansteuert, wird der Fahrer des Fahrzeugs in unterschiedlichen Fahrsituationen möglichst weitgehend unterstützt, indem ein Kupplungswunschmoment von der Steuerung abhängig von einer Fahrsituation korrigiert wird.

In der Offenlegungsschrift DE 102 20 869 A1 wird ein Verfahren zur Betätigung einer Kupplung in einem Kraftfahrzeug offenbart. Dies betrifft ein Verfahren zur Betätigung einer zwischen der Ausgangswelle eines Motors und einer Kraftübertragung in einem Kraftfahrzeug eingebauten Kupplung mittels eines Pedals, das mit einer Betätigungseinrichtung verbunden ist, die auf Ausrückmittel einwirkt, wobei diese Verfahren beinhaltet, die Position des Pedals zwischen seinen freigegebenen und maximal durchgetretenen Endpositionen zu erfassen und ein die erfasste Position des Pedals repräsentierendes Signal zu erzeugen, ausgehend von diesem Signal ein Steuersignal für die Betätigungseinrichtung zu erstellen und es auf die Betätigungseinrichtung anzuwenden, die Position der Betätigungseinrichtung zu erfassen, ein diese Position repräsentierendes Signal zu erzeugen und es bei der Erstellung des vorgenannten Steuersignals zu berücksichtigen und das Auskuppeln im Verhältnis zur Verstellung des Pedals auf Leerwegen zu beschleunigen, die keine Auswirkung auf das übertragbare Drehmoment haben, wobei es außerdem beinhaltet, das Angreifen der Einrückmittel und den Schleifpunkt der Kupplung zu erfassen und das Auskuppeln im Verhältnis zur Verstellung des Kupplungspedals auf einem Arbeitsweg zu verlangsamen, der zwischen dem Angreifen der Ausrückmittel und dem Schleifpunkt der Kupplung liegt.

In jüngerer Zeit werden zunehmend so genannte "Drive-by-Wire" Systeme eingesetzt, bei denen zwischen einem manuell betätigten Betätigungsglied und einem Stellglied der zu betätigenden Einheit keine direkte Verbindung besteht. Die manuell betätigte Stellung des Betätigungsgliedes wird von einem Sensor erfasst und zu einem Steuergerät übertragen, das, gegebenenfalls unter Berücksichtigung der Ausgangssignale weiterer Sensoren eine jeweils einzustellende Stellung des Stellgliedes berechnet und einen Aktor des Stellgliedes entsprechend betätigt. Neben reinen Servofunktionen zur Minderung der für die Betätigung des Betätigungsgliedes erforderlichen Kräfte ergeben sich dadurch Möglichkeiten der Komfort- und Sicherheitsverbesserung.

Beispielsweise kann ein Fahrzeugmotor bei Aktivierung eines Antiblockierbremssystems oder eines sonstigen Fahrzeugstabilitätssteuersystems, das beispielsweise ein Schleudern des Fahrzeugs bei starker Lenkbewegung verhindern soll, durch Öffnen einer Kupplung von den angetriebenen Rädern getrennt werden, wodurch der Betrieb des Fahrzeugstabilitätssteuersystems vereinfacht und dessen Wirksamkeit erhöht werden kann.

Bei solchen "Clutch by-Wire" Systemen, bei denen die Kupplung nicht direkt vom Kupplungspedal her gesteuert wird, sondern von einem Aktor, der von einem Steuergerät angesteuert wird, das die Stellung des Kupplungspedals erfasst, soll die nicht direkte Betätigung der Kupplung für den Fahrer weitgehend nicht merkbar sein, das heißt, die Bedienung des Fahrzeugs mittels des Gas-, Brems- und Kupplungspedals bleibt weitgehend unverändert, jedoch können unerwünschte Situationen, wie Abwürgen des Motors, ruckartiges Einkuppeln usw. vermieden werden. Somit wird die Kupplung vom Aktor normalerweise derart gesteuert, dass ihre Stellung bzw. das übertragbare Kupplungsmoment einer jeweiligen, durch die Stellung des Kuppvorgegebenen Sollstellung entspricht und von dieser Sollstellung nur in besonderen Betriebszuständen zur Vermeidung unerwünschter Situationen abgewichen wird.

Der Erfindung liegt die Aufgabe zugrunde, unerwünschte Betriebszustände, die bei Systemen, bei denen die Kupplung von einem Aktor bei Aktivierung eines Fahrzeugstabilitätssteuersystems selbsttätig geöffnet wird, auftreten können, wenn die Aktivierung des Fahrzeugstabilitätssteuersystems endet, zu vermeiden.

Diese Aufgabe wird mit einem Verfahren zum Steuern des Betriebs einer im Antriebsstrang eines Fahrzeugs angeordneten Kupplung nach Anspruch 1 gelöst.

Auf diese Weise können Problemzustände, die zu einem unkomfortablen Einkuppeln nach der Aktivierung des Fahrzeugstabilitätssteuersystems oder zu gefährlichen Betriebszuständen führen können, vermieden werden.

Beispielsweise wird die Kupplung nach einer Fahrzeugbremsung, deren Endgeschwindigkeit mit einer am Ende der Fahrzeugbremsung vorhandenen Übersetzung kompatibel ist, unter Minimierung einer durch ihr Schließen bedingten Fahrzeugbeschleunigung in die durch die Stellung des Kupplungspedals vorgegebene Sollstellung gebracht.

Eine Vorrichtung zum Steuern des Betriebs einer im Antriebsstrang eines Fahrzeugs angeordneten Kupplung enthält einen Aktor zur Betätigung der Kupplung, ein Kupplungspedal, einen Sensor zum Erfassen der Stellung des Kupplungspedals, Sensoren zur Erfassung von Betriebszuständen des Antriebsstrangs und ein elektronisches Kupplungssteuergerät, dessen Eingänge mit den Sensoren verbunden sind und das einen mit dem Aktor verbundenen Ausgang aufweist, wobei das Steuergerät den Aktor entsprechend einem der vorgenannten Verfahren steuert.

Die Erfindung wird im Folgenden anhand schematischer Zeichnungen beispielsweise und in weiteren Einzelheiten erläutert.

In den Figuren stellen dar:
Fig. 1 ein Schema eines Fahrzeugantriebsstrangs und
Fig. 2 ein Flussbild zur Erläuterung eines erfindungsgemäßen Verfahrens.

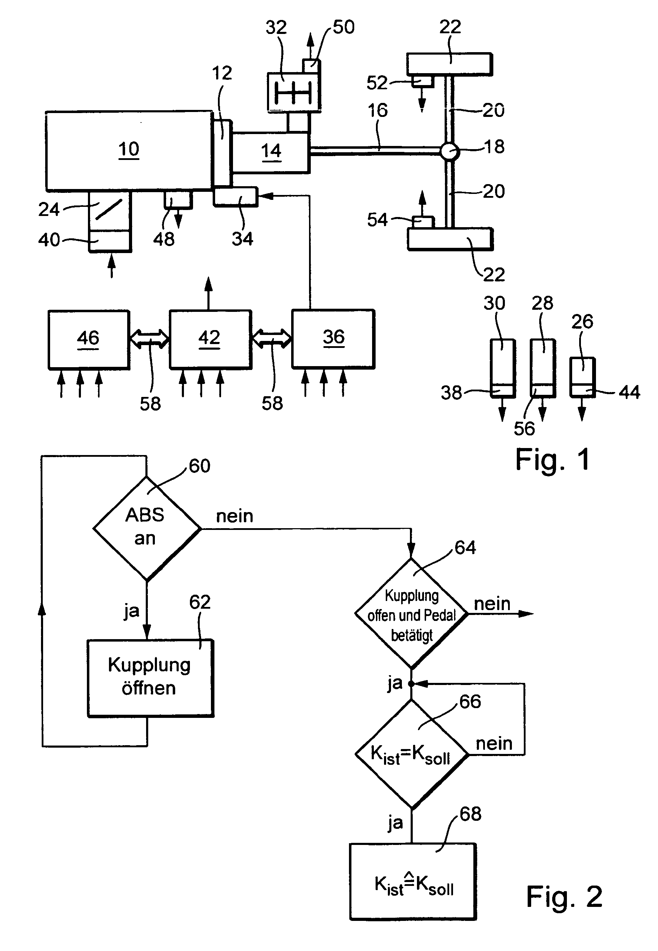

Gemäß Fig. 1 enthält ein Fahrzeugantriebstrang einen Fahrzeugmotor 10, der über eine Kupplung 12 mit einem Schaltgetriebe 14 verbunden ist, das über eine Kardanwelle 16, ein Differential 18 und Antriebswellen 20 mit angetriebenen Hinterrädern 22 eines Fahrzeugs verbunden ist. Es versteht sich, dass der Antriebsstrang auch als Vorderradantriebsstrang oder Allradantriebsstrang ausgebildet sein könnte.

Die Leistung des Motors 10 wird mittels eines Laststellgliedes 24, beispielsweise einer Drosselklappe, gesteuert.

Für seine Betätigung durch einen Fahrer oder eine Fahrerin weist das Fahrzeug in an sich bekannter Weise unter anderem ein Gaspedal 26, ein Kupplungspedal 28, ein Bremspedal 30 sowie eine Schalthebelbaugruppe 32 auf.

Für die Betätigung der Kupplung 12 ist ein Kupplungsaktor 34 vorgesehen, der von einem Kupplungssteuergerät 36 angesteuert wird, das mindestens einen mit einem Sensor 38 zur Erfassung der Stellung des Kupplungspedals 30 verbundenen Eingang aufweist. Die Kupplungsbetätigung ist somit, wie eingangs erläutert, als "Drive-by-Wire" System ausgebildet, wobei das Kupplungssteuergerät 36 den Kupplungsaktor 34 abhängig von der Stellung des Kupplungspedals 30 sowie weiterer Betriebsparameter steuert.

Auch die Betätigung des Laststellgliedes 24 erfolgt vorteilhafterweise durch ein Drive-by-Wire System, indem ein Laststellgliedaktor 40 von einem Motorsteuergerät 42 angesteuert ist, das einen Eingang aufweist, der mit einem Sensor 44 zur Erfassung der Stellung des Gaspedals 26 verbunden ist.

Weiter ist ein Steuergerät 46 eines Fahrzeugstabilitätssteuersystems vorgesehen, das mit verschiedenen Sensoren zur Erfassung von Betriebsparametern des Fahrzeugs verbunden ist und beispielsweise Steuersignale zur Steuerung der nicht dargestellten Radbremsen des Fahrzeugs sowie zur Öffnung der Kupplung und zur Veränderung des Laststellgliedes 24 erzeugt. Sensoren zum Erfassen der Betriebsparameter sind beispielsweise ein Drehzahlsensor 48 zum Erfassen der Drehzahl des Antriebsmotors 10, ein Gangsensor 50 zur Erfassung der Stellung eines Schalthebels, Raddrehzahlsensoren 52, 54, ein Sensor 56 zur Erfassung der Betätigung des Bremspedals 28 sowie gegebenenfalls weitere Sensoren.

Die Steuergeräte 36, 42, 46, können getrennte Einheiten mit einem jeweiligen Prozessor und Speichereinrichtungen sein, die über ein BUS-System 58 kommunizieren. Die Steuergeräte können auch in unterschiedlicher Weise zusammengefasst sein oder durch ein einziges Steuergerät realisiert sein.

Aufbau und Funktion des bisher beschriebenen Antriebsstrangs sind an sich bekannt und werden daher nicht im Einzelnen erläutert.

Die Steuerung kann beispielsweise derart sein, dass die Kupplungsstellung bzw. das von der Kupplung 12 übertragbare Moment normalerweise einer durch die Stellung des Kupplungspedals 30 gegebenen Sollkurve folgt. Bei Aktivierung einer ABS-Funktion durch das Steuergerät 46, d.h. bei Erkennung, dass beim Bremsen wenigstens ein Fahrzeugrad zum Rutschen neigt, öffnet der Kupplungsaktor 34, unabhängig davon, ob das Kupplungspedal 30 betätigt ist oder nicht, die Kupplung 12 vollständig, so dass die Fahrzeugräder frei von Antriebs- oder Bremseinflüssen des Motors 10 sind.

Im Folgenden werden erfindungsgemäße Maßnahmen beschrieben, mit denen nach Beendigung der Aktivierung des Fahrzeugstabilitätssteuersystems, beispielsweise wenn keine Blockiergefahr beim Bremsen mehr besteht, oder wenn ein drohendes Schleudern des Fahrzeugs vermieden wird, die Betätigung der Kupplung auf die im Wesentlichen durch die Stellung des Kupplungspedals 30 bestimmte Sollstellung rückgeführt werden kann. Die Funktion des Kupplungssteuergeräts 36 ist derart, dass das Kupplungssteuergerät 36 jeder Stellung des Kupplungspedals 30 eine Steuergröße zuordnet, entsprechend der der Kupplungsaktor 34 angesteuert wird, so dass jeder Stellung des Kupplungspedals 30 eine Sollstellung der Kupplung 12 entspricht, bei der die Kupplung beispielsweise ein vorbestimmtes Moment übertragen kann. Nur in Ausnahmefällen wird dieser Grundsteuerung bzw. Grundauslegung eine von Werten von Betriebsparametern des Fahrzeugs abhängige Steuerung überlagert, die zur einer Abweichung zwischen der Beziehung zwischen der Sollstellung der Kupplung 12 und der Stellung des Kupplungspedals 30 führt; beispielsweise wird die Kupplung 12, wie erläutert, bei Aktivierung des Fahrzeugstabilitätssteuergerätes 46, das heißt beispielsweise bei Auslösen eines ABS-Systems, vom Aktor 34 voll geöffnet, auch wenn das Kupplungspedal 30 nicht betätigt ist.

### Situation 1: Ähnliche Fahrzeuggeschwindigkeit

Diese Situation liegt vor, wenn das Fahrzeug während der Aktivierung des ABS-Systems nur so wenig abgebremst wird, dass die am Ende der ABS-Bremsung vorhandene Fahrzeuggeschwindigkeit noch kompatibel mit der eingelegten Gangstufe ist, das heißt, die Kupplung 12 geschlossen werden kann, ohne dass der Motor unzulässig hoch oder unzulässig niedrig dreht. In diesem Fall wird die Kupplung entsprechend einem im Kupplungssteuergerät 36 abgelegten Algorithmus beispielsweise innerhalb einer Sekunde geschlossen, wobei sich dieses Schließen auf die Fahrzeugbeschleunigung oder die Fahrzeugverzögerung möglichst wenig auswirken soll. Die Zeitdauer, innerhalb der die Kupplung - bei nicht Betätigen des Kupplungspedals - vom Aktor 34 geschlossen wird, kann beispielsweise umso länger sein, je mehr die augenblickliche Motordrehzahl von der Motordrehzahl bei geschlossener Kupplung abweicht (Strategie 1).

Beispielsweise wird die infolge der Aktivierung des Fahrzeugstabilitätssteuersystems geöffnete Kupplung bei Beendigung der Aktivierung des Fahrzeugstabilitätssteuersystems vom Aktor geschlossen bis ihre Stellung der der Stellung des Kupplungspedals entsprechenden Sollstellung entspricht, und betätigt der Aktor die Kupplung anschließend derart, dass ihre Stellung der durch die Stellung des Kupplungspedals gegebenen Sollstellung entspricht.

### Situation 2: Betätigung des Kupplungspedals

In der zweiten Situation tritt der Fahrzeugfahrer während der ABS-Bremsung auf das Kupplungspedal 30. In diesem Fall wird die Kupplungssteuerung auf die durch die Stellung des Kupplungspedals 30 bestimmte Sollsteuerung zurückgeführt, sobald die durch den Aktor 34 bestimmte Iststellung der durch die Stellung des Kupplungspedals 30 gegebene, im Kupplungssteuergerät 26 abgelegten Sollstellung der Kupplung 12 entspricht. Anschließend steuert der Aktor die Kupplung entsprechend der Betätigung des Kupplungspedals.

Diese Durchführungsform des Verfahrens wird anhand der Fig. 2 erläutert.

Im Schritt 60 wird ermittelt, ob die ABS-Steuerung (Bremsblockierverhinderung) aktiviert ist. Ist dies der Fall, so wird der Aktor 34 vom Kupplungssteuergerät 36 zur Öffnung der Kupplung 12 im Schritt 62 angesteuert. Entsprechend der Taktgeschwindigkeit erfolgt im Schritt 60 erneut die Überprüfung, ob das ABS-System aktiviert ist. Sobald das nicht mehr der Fall ist, wird im Schritt 64 überprüft, ob die Kupplung 12 geöffnet und das Kupplungspedal 30 getreten ist. Ist das nicht der Fall, geht das Verfahren beispielsweise zur Strategie 1 über, falls möglich. Ist das der Fall, so wird im Schritt 66 überprüft, ob die augenblickliche Kupplungsstellung Kist der der Pedalstellung entsprechenden Sollstellung Ksoll entspricht. Ist dies nicht der Fall, wird der Schritt 66 wiederholt. Bei positiver Überprüfung im Schritt 66 erfolgt im Schritt 68 die Kupplungsbetätigung entsprechend der Betätigung des Kupplungspedals (Strategie 2).

### Situation 3: Neutralgang

Der Fahrer legt mittels der Schalthebelbaugruppe 32 einen Neutralgang ein, ohne dass das Kupplungspedal 30 getreten wird. Dies kann beispielsweise dann der Fall sein, wenn ein Fahrer während einer ABS-Bremsung, ohne das Kupplungspedal 30 zu betätigen, den Neutralgang einlegt. Dies kann z.B. auch dann der Fall sein, wenn ohne Betätigung des Kupplungspedals ein Gangwechsel durchgeführt wird. In diesem Fall wird die Kupplung vom Aktor 34 rasch geschlossen (Strategie 3), so dass die Stellung der Kupplung 12 der Sollstellung entspricht, die die Kupplung bei nicht betätigtem Kupplungspedal 30 haben soll. Ein neuer Gang kann dann nicht synchronisiert werden, wodurch der Fahrer bemerkt, dass er das Kupplungspedal nicht betätigt hat.

Wenn der Gangwahlhebel über längere Zeit in Neutralstellung bleibt (beispielsweise länger als 2 Sekunden), kann das Kupplungssteuergerät 36 zu einer üblichen Neutralgang-Strategie übergehen, bei der die Kupplung bei nicht betätigtem Kupplungspedal vom Aktor 34 offen gehalten wird, bis ein Schaltwunsch erkannt wird, beispielsweise durch Betätigen der Schalthebelbaugruppe 32 oder auch Betätigen des Kupplungspedals 30.

### Situation 4: Zu hohe Fahrzeuggeschwindigkeit

Wenn die Fahrzeuggeschwindigkeit am Ende einer ABS-Bremsung oder beispielsweise am Ende der Aktivierung eines Schleuderverhinderungssystems höher als der aktuellen Gangstufe entsprechend ist, würde der Motor bei einem Schließen der Kupplung überdrehen. Eine Abhilfemöglichkeit besteht darin, dass die Kupplung offen bleibt (Strategie 4a), obwohl der Aktivzustand des Fahrzeugstabilitätssteuersystems endet, und erst nach entsprechendem Absinken der Fahrzeuggeschwindigkeit beispielsweise entsprechend der oben genannten Strategie 1 geschlossen wird.

Eine weitere Möglichkeit, ein Überdrehen des Motors zu verhindern, besteht darin, die Kupplung nur soweit zu schließen, bis der Motor zu seiner maximal zulässigen Drehzahl hochgezogen wird (Strategie 4b). Dieses Hochdrehen des Motors kann dem Fahrer signalisieren, dass ein falscher Gang eingelegt ist. Die Strategie 4b kann nur kurzzeitig angewendet werden, da die Kupplung durch den hohen Schlupf anderenfalls überhitzt würde. Um die Kupplung zu schützen, muss zur Strategie 4a zurückgekehrt werden.

Die vorgenannten Strategien 4a und 4b können auch unabhängig von der Aktivität eines Fahrzeugstabilitätssteuersystems angewendet werden, wenn beispielsweise in einen falschen Gang zurückgeschaltet wird und die Kupplung im zu niedrigen Gang unter Steuerung durch das Kupplungspedal geschlossen werden soll.

### Situation 5: Zu niedrige Fahrzeuggeschwindigkeit

Diese Situation tritt beispielsweise ein, wenn das Fahrzeug nach einer ABS-Bremsung soweit abgebremst ist; dass seine Geschwindigkeit unter der mit dem aktuellen Gang fahrbaren Geschwindigkeit liegt. Bei einem Schließen der Kupplung würde der Motor dann unzulässig niedrig drehen, was zu Schäden im Antriebsstrang führen könnte.

Ein untertouriges Betreiben des Motors kann dadurch vermieden werden, dass die Kupplung nach Beendigung der ABS-Bremsung (oder einer Abbremsung infolge der Aktivierung eines Antischleudersystems) offen gehalten wird (Strategie 5), bis das Kupplungspedal betätigt wird oder der falsche Gang ausgelegt und gegebenenfalls ein richtiger Gang eingelegt wird. Sollte die Fahrzeuggeschwindigkeit zunehmen, kann die Strategie 1 eingesetzt werden. Wenn das Fahrzeug stehen bleibt, kommt eine der nachfolgend erläuterten Strategien 6 zum Einsatz.

### Situation 6: Fahrzeug steht

Wenn das Fahrzeug bei geöffneter Kupplung, ohne dass diese Öffnung durch Betätigung des Kupplungspedals 30 erfolgt, bis zum Stillstand abgebremst wird, würde der Motor beim Schließen der Kupplung entweder abgewürgt werden oder das Fahrzeug würde unbeabsichtigt kriechen.

In einem Fahrzeug mit nicht über Drive-by-Wire betätigter Kupplung wird der Motor im allgemeinen abgewürgt, wenn während des Bremsens das Kupplungspedal nicht gedrückt wird. Eine Strategie (Strategie 6a) besteht darin, den Motor mittels der Motorsteuerung 46 aktiv abzuschalten, wenn es zu einem Fahrzeugstillstand kommt. Wenn der Motor abgestellt ist, kann die Kupplung geschlossen werden, so dass ihr Zustand der Stellung des Kupplungspedals 30 entspricht.

Eine andere Möglichkeit besteht darin, die Kupplung offen zu halten, bis das Kupplungspedal 30 gedrückt wird (Strategie 6b). Diese Strategie birgt ein Risiko dahingehend, dass der Fahrer das mit laufendem Motor und eingelegtem Gang und offener Kupplung stehende Fahrzeug verlässt. Die Kupplung müsste dann für unbestimmte Zeit offengehalten werden. Ein Defekt in der Aktorik der Kupplungsbetätigung, die auch eine hydraulische Übertragungsstrecke enthalten kann, könnte zu einem unbeabsichtigten Losfahren des Fahrzeugs führen. Deshalb ist es zweckmäßig, bei Anwendung der Strategie 6b dem Fahrer durch ein akustisches Signal die Diskrepanz zwischen Kupplungspedalstellung und tatsächlicher Kupplungsstellung anzuzeigen.

Die vorgenannten Strategien können in unterschiedlichster Weise modifiziert werden, indem beispielsweise die durch Drive-by-Wire erfolgende Laststeuerung des Motors Eingriffe erfährt, die einen Ruck oder eine Fahrzeugbeschleunigung oder Verzögerung beim Wiedereinkuppeln vermindern. Weiter können die Strategien auch bei Fahrzeugen ausgeführt werden, bei denen die Betätigung des Laststellgliedes 24 mittels des Gaspedals 26 unmittelbar und nicht über Drive-by-Wire erfolgt.

Der Antriebsstrang kann dahingehend abgeändert werden, dass zwischen einer Betriebsweise, bei der die Kupplungsstellung strikt der Stellung des Kupplungspedals folgt, einem Betrieb, bei der die Stellung der Kupplung der des Kupplungspedals in beispielsweise durch die geschilderten Strategien 1 bis 6 modifizierten Weise folgt, und einer Betriebsweise, bei der die Kupplung vollautomatisch betätigt wird, d.h. keine Betätigung des Kupplungspedals 30 erforderlich ist, umgeschaltet wird. Im letzteren Fall der vollautomatischen Kupplungsbetätigung können die gestellten Strategien zusätzlich eingesetzt werden, sofern sie keine manuelle Kupplungsbetätigung erfordern.

Auch das Getriebe 14 kann manuell über die Schalthebelbaugruppe 32 betätigt werden oder automatisiert sein, indem die einzelnen Gänge entsprechend vorbestimmten Fahrprogrammen in an sich bekannter Weise eingelegt werden.

### Bezugszeichenliste

- 10: Fahrzeugmotor
- 12: Kupplung
- 14: Schaltgetriebe
- 16: Kardanwelle
- 18: Differential
- 20: Antriebswelle
- 22: Hinterrad
- 24: Laststellglied
- 26: Gaspedal
- 28: Bremspedal
- 30: Kupplungspedal
- 32: Schalthebelbaugruppe
- 34: Kupplungsaktor
- 36: Kupplungssteuergerät
- 38: Sensor
- 40: Laststellgliedaktor
- 42: Motorsteuergerät
- 44: Sensor
- 46: Steuergerät
- 48: Drehzahlsensor
- 50: Gangsensor
- 52: Raddrehzahlsensor
- 54: Raddrehzahlsensor
- 56: Sensor
- 58: BUS-System

## Patentansprüche

1. Verfahren zum Steuern des Betriebs einer im Antriebsstrang eines Fahrzeugs angeordneten Kupplung (12), die von einem Aktor (34) bei Aktivierung eines Fahrzeugsstabilitätssteuersystems (46) geöffnet wird, wobei die Kupplung (12) nach Beendigung der Aktivierung des Fahrzeugstabilitätssteuersystems (46) von dem Aktor (34) abhängig von Betriebsparametern des Fahrzeugs in eine Stellung bewegt wird, die einer durch ein Kupplungspedal (3) vorgegebenen Sollstellung entspricht, **dadurch gekennzeichnet, dass** die Kupplung (12) kurzeitig am Ende der Aktivierung des Fahrzeugstabilitätssteuersystems (46) nur so weit geschlossen wird, dass der Fahrzeugmotor (10) eine maximal zulässige Drehzahl des motors nicht überschreitet, falls ein vollständiges Schließen der Kupplung zu einem Überdrehen des Fahrzeugantriebsmotors führen würde, und nachfolgend die Kupplung geöffnet wird, um vor Überhitzung zu schützen.

2. Verfahren nach Anspruch 1, **dadurch gekennzeichnet, dass** die Kupplung (12) nach einer Fahrzeugbremsung, deren Endgeschwindigkeit mit einer am Ende der Fahrzeugbremsung vorhandenen Übersetzung kompatibel ist, unter Minimierung einer durch ihr Schließen bedingten Fahrzeugbeschleunigung in die durch die Stellung des Kupplungspedals (30) vorgegebene Sollstellung gebracht wird, wobei eine Fahrzeuggeschwindigkeit kompatibel mit der Übersetzung der eingelegten Gangstufe ist, wenn die Kupplung geschlossen werden kann, ohne dass der Motor unzulässig hoch oder unzulässig niedrig dreht.

3. Verfahren nach einem der Ansprüche 1 bis 2, **dadurch gekennzeichnet, dass** die Kupplung (12) am Ende der Aktivierung des Fahrzeugstabilitätssteuersystems (46) maximal so weit geschlossen wird, dass die Drehzahl des Fahrzeugantriebsmotors (10) eine vorbestimmte Drehzahl nicht unterschreitet.

4. Vorrichtung zum Steuern des Betriebs einer im Antriebsstrang eines Fahrzeugs angeordneten Kupplung (12), welche Vorrichtung
einen Aktor (34) zur Betätigung der Kupplung,
ein Kupplungspedal (30),
einen Sensor (38) zum Erfassen der Stellung des Kupplungspedals,
Sensoren (44, 48, 50, 52, 54, 56) zur Erfassung von Betriebszuständen des Antriebsstrangs und ein elektronisches Kupplungssteuergerät (36) enthält, dessen Eingänge mit den Sensoren verbunden sind und das einen mit dem Aktor (34) verbundenen Ausgang aufweist, **dadurch gekennzeichnet, dass** das Steuergerät den Aktor entsprechend einem der Ansprüche 1 bis 3 steuert.

## Claims

1. Method for controlling the operation of a clutch (12) which is arranged in the drive train of a vehicle and which is opened by an actuator (34) when a vehicle stability control system (46) is activated, wherein, after the ending of the activation of the vehicle stability control system (46), the clutch (12) is moved by the actuator (34), as a function of operating parameters of the vehicle, into a position which corresponds to a setpoint position predefined by a clutch pedal (3), **characterized in that** at the end of the activation of the vehicle stability control system (46) the clutch (12) is closed briefly only to such an extent that the vehicle engine (10) does not exceed a maximum permissible rotational speed of the engine if complete closure of the clutch were to lead to spinning of the vehicle drive engine, and subsequently the clutch is opened in order to protect against overheating.

2. Method according to Claim 1, **characterized in that** after a vehicle braking operation whose final speed is compatible with a transmission ratio which is present at the end of the vehicle braking operation, the clutch (12) is changed into the setpoint position predefined by the position of the clutch pedal (30) while acceleration of the vehicle caused by the closing of said clutch is minimized, wherein a vehicle speed is compatible with the transmission ratio of the engaged gear speed if the clutch can be closed without the engine turning at an unacceptably high or unacceptably low rate.

3. Method according to one of Claims 1 to 2, **characterized in that** at the end of the activation of the vehicle stability control system (46) the clutch (12) is closed at maximum to such an extent that the rotational speed of the vehicle drive engine (10) does not undershoot a predetermined rotational speed.

4. Device for controlling the operation of a clutch (12) which is arranged in the drive train of a vehicle, which device contains an actuator (34) for activating the clutch, a clutch pedal (30), a sensor (38) for detecting the position of the clutch pedal, sensors (44, 48, 50, 52, 54, 56) for detecting operating states of the drive train and an electronic clutch control device (36) whose inputs are connected to the sensors and which has an output which is connected to the actuator (34), **characterized in that** the control device controls the actuator in accordance with one of Claims 1 to 3.

## Revendications

1. Procédé de contrôle du fonctionnement d'un embrayage (12) disposé dans le train d'entraînement d'un véhicule et ouvert par un actionneur (34) lorsqu'un système (46) de commande de la stabilité du véhicule est activé,
l'embrayage (12) étant déplacé en fonction de paramètres de fonctionnement du véhicule dans une position qui correspond à une position de consigne prédéterminée par une pédale d'embrayage (3) lorsque l'activation du système (46) de contrôle de la stabilité du véhicule par l'actionneur (34) est terminée,
**caractérisé en ce que**
à la fin de l'activation du système (46) de contrôle de la stabilité du véhicule, l'embrayage (12) n'est fermé brièvement que suffisamment pour que le moteur (10) du véhicule ne dépasse pas une vitesse de rotation maximale admissible du moteur au cas où une fermeture complète de l'embrayage aurait conduit à un sur-régime du moteur d'entraînement du véhicule, l'embrayage étant ensuite ouvert pour le protéger d'une surchauffe.

2. Procédé selon la revendication 1, **caractérisé en ce qu'**après un freinage du véhicule dont la vitesse finale est compatible avec le rapport de transmission existant à la fin du freinage du véhicule, l'embrayage (12) est amené dans une position de consigne prédéterminée par la position de la pédale d'embrayage (30) en minimisant l'accélération du véhicule provoquée par sa fermeture, la vitesse du véhicule étant compatible avec le rapport de transmission engagé lorsque l'embrayage peut être fermé, sans que le moteur tourne trop rapidement ou trop lentement.

3. Procédé selon l'une des revendications 1 et 2, **caractérisé en ce qu'**à la fin de l'activation du système (46) de contrôle de la stabilité du véhicule, l'embrayage (12) est fermé au plus jusqu'à ce que la vitesse de rotation du moteur (10) d'entraînement du véhicule ne descende pas en dessous d'une vitesse de rotation prédéfinie.

4. Dispositif de contrôle du fonctionnement d'un embrayage (12) disposé dans le train d'entraînement d'un véhicule, le dispositif présentant :
un actionneur (34) qui actionne l'embrayage,
une pédale d'embrayage (30),
un détecteur (38) qui détecte la position de la pédale d'embrayage,
des détecteurs (44, 48, 50, 52, 54, 56) qui détectent les états de fonctionnement du train d'entraînement et
un appareil électronique (36) de contrôle de l'embrayage dont les entrées sont reliées au détecteur et dont une sortie est reliée à l'actionneur (34), **caractérisé en ce que**
l'appareil de contrôle commande l'actionneur selon l'une des revendications 1 à 3.
